# EUROPEAN PATENT APPLICATION

(11) **EP 0 670 622 A1**
(43) Date of publication of application: **06.09.1995**
(21) Application number: 95830061.8
(22) Date of filing: 28.02.1995
(51) Int. Cl.: H02K 29/03, H01R 39/10

(54) **Improvement to electric motors**

(30) Priority: 04.03.1994 IT BS940014; 29.11.1994 IT BS940140
(71) Applicant: BETA ENGINEERING S.n.c. di BBELLANDI G. & C., I-25030 Roncadelle (Brescia) (IT)
(72) Inventor: Tanfoglio, Dario, I-25030 Castelmella (Brescia) (IT); Bellandi, Giuseppe, I-25030 Roncadelle (Brescia) (IT)
(74) Representative: Manzoni, Alessandro

(57) **Abstract**

An electric motor with a current commutator independent of the frequency of the power supply current. It comprises at least one exciter (15) applied onto the rotor (13) and indicative of the position of a polarity plurality of the rotor; a sensor-detector (17) that detects the presence or position of the exciter (15) when it passes by upon rotation with the rotor; and a circuit (18) for inversion of the direction of the electrical current at the coils (11', 12') of the inductor, the sensor (15) controlling the circuit of inversion (18) in response to signals of presence supplied by the exciter (15).

## Description

The present invention concerns electric motors in general.

Concerning electric motors, on the market may be found:
- commutator motors, both with alternating current (a.c.) and direct current (d.c.);
- induction motors operating with mains a.c.;
- a.c. induction motors operating with frequency generators.

All these types of motors show however drawbacks and disadvantageous characteristics acknowledged by the experts in the sector.

A.c. commutator motors usually comprise excitation coils on the stator and on the rotor, which are cause of radio disturbance and have problems with the commutator brushes wearing and the need for maintenance. D.c. commutator motors comprise magnets on the stator and excitation coils on the rotor and suffer the same problems as analogous a.c. commutator motors.

Induction motors operating with mains current have their rotation speed strictly depending on the frequency of the supply current, which therefore cannot be increased over a certain limit. Induction motors operating with a frequency generator can obviate the limit depending on the frequency of the supply current. However, these motors, as their operation is tied to high frequency generated from outside, can have great problems in starting and may even fail to start. In addition, during operation, when the load changes they may get out of phase with respect to the input frequency to the detriment of efficiency. For example, with a power supply frequency of 250Hz, the motor makes 250 revolutions per second, but in applying the load speed may hypothetically fall to 150 rev./sec., the difference of 100Hz between the input frequency and the motor revs. affects the motor efficiency. In effect, motors with a.c. or with specifically generated frequency, and which may be provided with excitation coils on the stator and with magnets on the rotor or vice versa, suffer from low starting and therefore they are used when there are low loads.

The present invention aims at obviating the problems and limits of the above mentioned electric motors by eliminating the traditional commutator and relative brushes. This is obtained by switching over current direction in an inversion circuit of the polarity controlled by a magnetic, optic, inductive, electronic or mechanical sensor entirely independently of the supply current frequency when this is alternated. The motor becomes a direct current induction type, but it can be powered with alternating current from the mains and with polarity commutation which can be effected with a desired frequency entirely freed from the frequency of the power supply mains current. In other words, the power supply alternating current is rectified in direct current and a specific polarity inversion circuit controls the d.c. in order to generate a square or sinusoidal frequency of the desired value, always in phase with the rotation of the motor and related to the number of revolutions desired. Such a frequency is substantially self-generated by the motor itself.

The invention is advantageously applied to electric induction motors provided either with permanent magnets on the rotor and excitation coils on the stator, and vice versa, with excitation coils on the rotor and magnets on the stator, and again with an internal rotor or with an external rotor. The application proposed here allows developing reliable starting and an unlimited number of revolutions, entirely freed from the frequency of power supply current even if adjustable through common measures to prevent overspeeding. The commutation system for the polarity of the current to the induction coils can moreover be obtained with economic elements, small in size and easy to combine with the motor. They do not significantly affect the dimensions and costs of the motor, so that it may find application anywhere, competitively with traditional motors of the same kind and, above all, with improved performance in operation and service life. Furthermore, the commutation system allows optimizing the efficiency of an electric motor, reducing absorption of electrical energy when the motor is at speed.

The motor proposed herein is basically as claimed in the claim 1 that will follow. It shall be described more in detail in the continuation of the description made with reference to the accompanying illustrative drawings in which:
Figure 1 shows a schematic side view of an induction motor with magnets on the internal rotor according to the invention;
Figures 2 and 3 show a schematic end view of the motor in Fig. 1 in two different conditions with the motor and in rotation;
Figure 4 shows a schematic side view of a motor with magnets on the stator and coils on the internal rotor;
Figure 5 shows a diagram of a motor with straight line movement incorporating the invention;
Figure 6 shows an applicative variant of the invention;
Figure 7 shows another diagram of the invention;
Figure 8 shows a schematic side view of a motor as in Figure 1 but with another system of commutation according to the invention;
Figure 9 shows a schematic end view of the motor in Figure 8 in a first position;
Figure 10 shows an analogous end view of the motor of Figure 8 in a second position;
Figure 11 shows a cross-section view of the commutator of Figure 3 in one of its preferred embodiments;
Figure 12 shows a different execution of the invention; and
Figure 13 shows an additional execution of the invention.

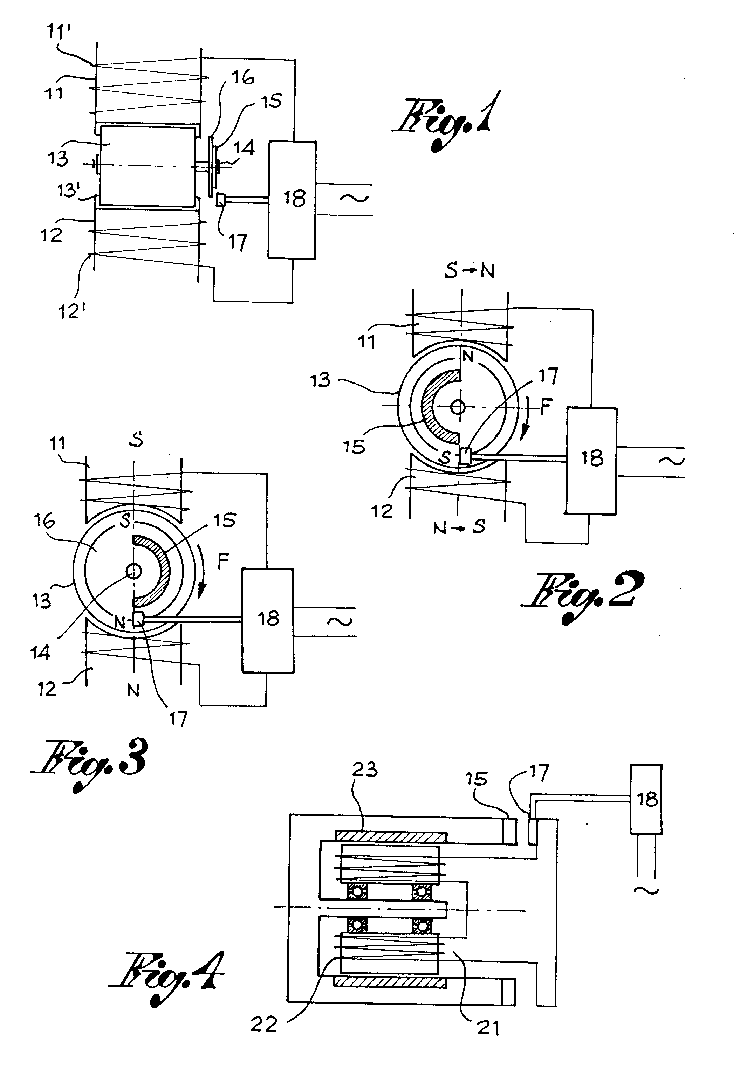

A motor of the type illustrated in Figures 1-3 comprises at least two polar expansions 11, 12, integral with a stator 13' and around which are wound excitation coils 11',12', and a magnetic rotor 13 at least bipolar (N-S), rotating between the polar expansions 11,12 and having a driving shaft 14.

On the driving shaft 14 an exciter 15 is fitted, understood as a rotor polarity indicator element (N or S). In one of its simpler embodiments, the exciter 15 can comprise a permanent magnet shaped in a semicircle, or an optic, mechanical, electronic element, etc., but still correlated to and indicative of the position of a polarity of the rotor. The exciter 15 may be applied onto a rotating disc 16 with the driving shaft 14 as shown in the drawings or fixed directly onto the rotor.

The exciter 15 is combined with a sensor-detector 17 designed to detect the presence or absence of the exciter when it passes by upon rotation of the motor. Such a sensor 17 may be of magnetic, optic, inductive, electronic or mechanical type depending on the kind of exciter 15 and it is designed to control a circuit 18 for inverting the direction of the electrical current to the coils 11', 12' on the polar expansions 11, 12. This inversion circuit 18 may be powered by d.c. or by a.c.. When powered by mains a.c., the inversion circuit also includes a rectifier for conversion of the input a.c. into output d.c. to the coils 11', 12'.

The exciter-sensor 15, 17 coupling controls the output direct current from the inverter and powering the coils 11', 12'. In effect, the sensor 17 controls the inversion circuit 18 to generate a square or sinusoidal wave frequency in phase upon rotation of the rotor independently of the speed and of the loads of the motor.

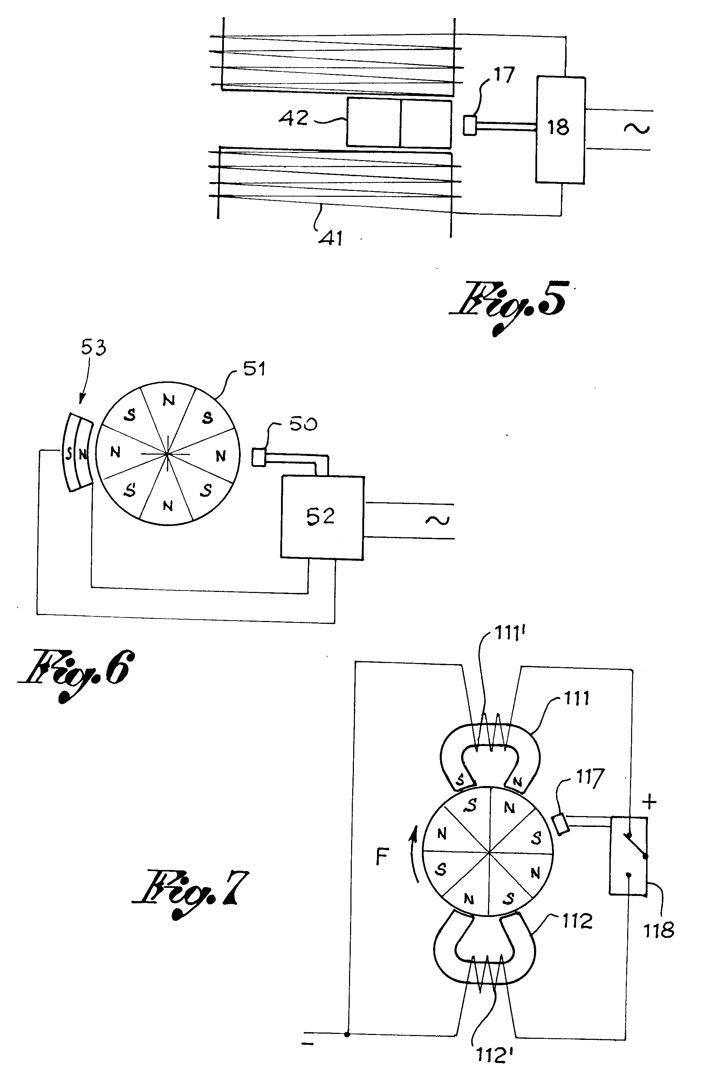

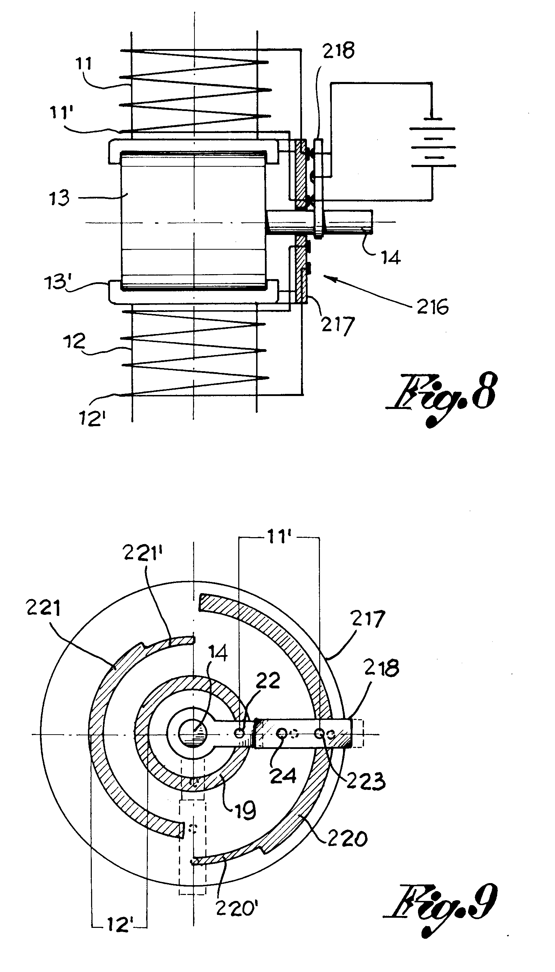

In practice, with the motor stationary, that is with no electrical power, the exciter 15 may by chance be in the position shown in Figures 2 or 3. In the position in Fig. 2, the sensor 17 does not detect the presence of the exciter 15; in this case, powering the motor through the inverter 18, a suitable current will arrive at the stator coils to polarize the polar expansions equally with the polarity of the motor 13. In this way the equal polarities repel each other and the motor starts turning in the direction of arrow F.

After half a turn of the rotor (according to arrow F), see Fig. 3, the sensor detects the presence of the exciter 15 and enables the inversion circuit 18 to exchange the polarization of the polar expansions 11, 12 on the stator which will then and again take on polarities equal to the contiguous polarities of the rotor. In the example illustrated, in the presence of equal contiguous polarities there is a repulsion for one quarter of a turn and then attraction between the different polarities during the following quarter turn. When the sensor is not opposite the exciter 15 it remains de-energized without affecting the polarity of the supply current to the coils on the stator, but it will control the inversion circuit again as soon as it is opposite the exciter 15, thereby ensuring continuity in motor rotation entirely independently of the power supply current frequency.

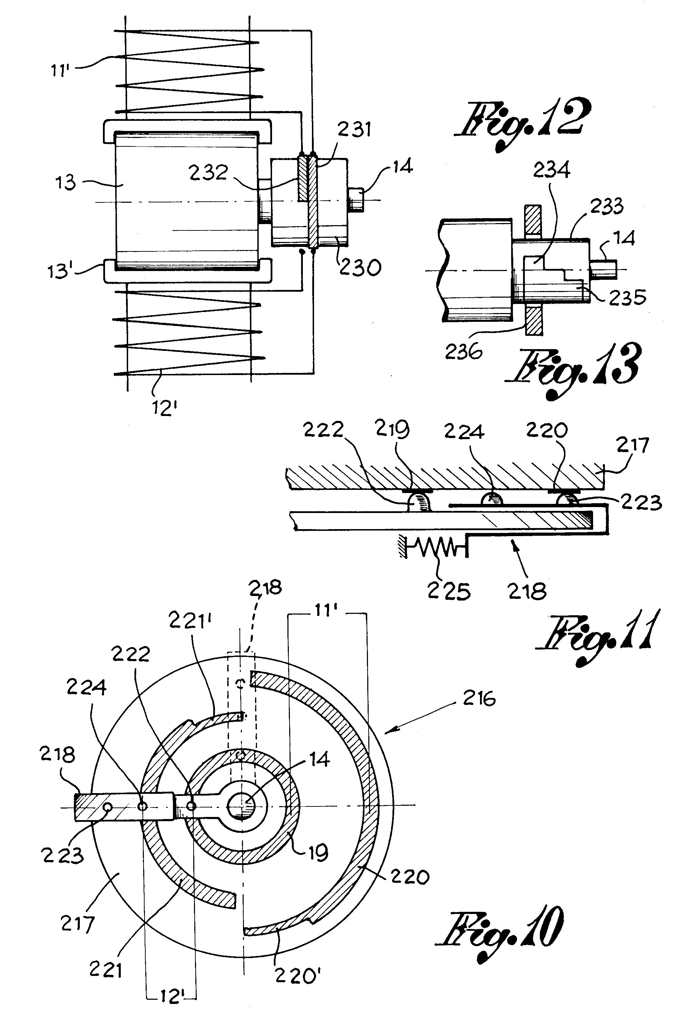

Fig. 4 of the drawing illustrates a motor with an internal stator inductor 21 with polar expansions and relative excitation coils 22 and an external magnetic rotor 23.

In this case, as well, the exciter 15 is applied onto the rotor and the sensor 17 controlling the inversion circuit 18 is applied onto the stator with the same function as described above in connection with the motor of Figures 1-3.

A similar application with the same result may be obtained on every other kind of induction motor, whether with internal or external rotor, with excitation coils on the stator, as described above, or on the rotor, and again on motors having stator and rotor with more than two polar expansions, in which case the exciter may be split up into the same number of segments as the number of polar expansions and the sensor will be made to detect the presence of every segment of the exciter.

The same principle may be applied to a motor with straight-line movement as well, as shown in Fig. 5, and basically including a stator inductor 41 and an internal magnetic cursor 42.

In this case, as well, a sensor 15 excited by the polarities of the magnetic cursor controls an inverter circuit 18 to exchange the polarization of the stator with the desired frequency.

The invention is also applied with a system as shown in Fig. 6, in which a polarity sensor 50 directly detects the polarities N-S of a magnetic rotor 51 and through an invertor circuit 52 it exchanges the current, therefore the polarity, on an inductor 53 interacting with the rotor.

In a variant as shown in Fig. 7, the two coils 111', 112' on the polar expansions 111, 112 of the inductor may be independent, and the circuit 118, instead of being an inverter, may be a commutator and control alternately the coils in phase with the rotor, however always in phase with the signals supplied by the sensor-detector 117 interacting with an exciter 115 of the kind described above. In this case each coil 111', 112' will work with an always positive or negative pulsating current, the one being powered electrically when the other is not powered so that the sum of the pulsating current at the two coils corresponds to the direct power supply current from the commutator circuit 118.

Again according to the invention, the excitation coils 11', 12' may be electrically powered through a current commutation-deviation system 216 and controlled in phase with the rotor. The commutation-deviation system 216 essentially comprises at least one distribution support 217 and at least one switch brush 218.

The support 217 is preferably fixed and the brush 218 rotating, but alternatively the support may be rotating and the brush fixed, with a similar result. Figures 8-10 and the continuation of the description refer to an execution of the invention in which the support is fixed and the brush rotating.

When support 217 is fixed, it can be constrained to the stator 213' or to another stationary part of the motor concentrically to the driving shaft 14, whereas the brush 218 is applied and turns with the driving shaft, therefore always and perfectly in phase with the rotor.

Brush 218 moves in rotation parallel to a front surface of support 217 and in a simplified version illustrated herein, said support 217 supports on this front surface: a first annular contact track 219, continuous and concentric with the driving shaft; a second contact track 220, in an arc, on a circumference concentric to the annular track 219; a third contact track 221, again in an arc, on another circumference concentric to the annular track but in an opposite quadrant to the one where the second arc track 220 is located.

The angular breadth of each arc track 220, 221 may be chosen at will depending, for instance, on the number of polarities of the rotor, etc..

The first annular contact track 219 is connected to an ordinary conductor for the excitation coils 11', 12' on the stator, whereas each arc contact track 220, 221 is connected to a phase conductor for each excitation coil 11', 12'. The brush 218 in its turn carries a first contact 222 sliding on the first annular contact track 219, a second contact 223 sliding on the second arc track 220 and a third contact 224 sliding on the third contact track 221 of the support 217. The first contact 22 is connected to an electric power supply circuit through an ordinary conductor whereas the second contact 223 and the third contact 224 are each connected to a phase conductor of such a power supply circuit.

Therefore, always considering the support 217 with the contact tracks 219, 220, 221, the rotations of the rotor 13 correspond to the rotations of the switch brush 218. The first contact 222 of this brush still remains in contact with the annular track on the support 217. Whereas, the second and third contacts 223, 224 of the brush 218 come into contact, in succession and at each turn of the rotor, respectively with the second arc track 220 and the third arc track 221 of said support thereby commutating the power supply current on the coils of the inductor in phase with the rotation of the rotor and independently of the number of revolutions of the rotor itself.

Advantageously, the arc tracks 220, 221 on the support 217 may each have an initial sector 220', 221', respectively, which in a radial direction is narrower than the remaining part of the tracks and which is located on an internal band of the tracks themselves. The brush, at least for its part carrying the second and third contact 223, 224, may be in a telescopic form, that is in the form of a slider, see Fig. 11, to extend because of the centrifugal force due to rotation thereof with the rotor. The extension of the telescopic or sliding brush may be opposed by a spring 2 or a spring 225. All in such a manner that on starting the motor and as long as the rotor is at a low, with pre-set number of revs, the brush 218 will keep its shortened form and the contacts 222, 223 can immediately meet the narrower sector of the respective tracks 220, 221 and follow the internal parts of the tracks for greatest extension thereof. The motor will then have energy absorption and corresponding power supply enabling it to accelerate up to reach the preset number of reys. When the motor is then at speed, the brush extends by the centrifugal force it is subjected to and its contacts 220, 221 will then travel on the external sectors which are shorter than the respective tracks with less energy absorption corresponding to the section and time of shortest contact of the contacts 220, 221 on the brush with the respective tracks on the support. The variation in position of the contacts that leads to less absorption occurs on the level of commutation and is basically controlled mechanically thanks to the speed and to the centrifugal force the brush is subject to.

This condition clearly cannot be achieved when the brush is fixed and the support with the contact tracks turns.

In a different embodiment, as shown in Fig. 12, the commutation tracks extend circumferentially on the periphery of a cylindrical switch 230 keyed on and turning with the driving shaft. In this case a common circular track 231 may be provided for a first contact involving the excitation coils to be powered and at least one arc track 232 which, upon rotation of the switch, goes into contact in succession with the phase contacts of each coil for the commutation of the current on the coils themselves.

Finally, Fig. 13 shows an execution in which the cylindrical switch 233 circumferentially supports two or more tracks 234, 235, etc. of different angular breadth, located in succession according to the axis of the switch 233, and a contact brush 236 which can be positioned as preferred at any track.

## Claims

1. An electric motor comprising an inductor with at least two polar expansions (11, 12) provided with electrical excitation coils (11', 12') and a magnetic rotor (13) at least bipolar rotating with respect to the polar expansions of the inductor and having a driving shaft 14 **characterized**
- in at least one exciter (15) applied to the rotor (13) and indicative of the position of a polarity of the same rotor;
- in a sensor-detector (17) to detect the presence or position of the exciter (15) when it passes by upon rotation of the exciter with the rotor;
- in a circuit (18) for inversion of the direction of the electrical current to the coils (11', 12') of the inductor, connected to an electrical power supply, to said coils and to said sensor (15), the sensor (15) controlling the inversion circuit (18) in response to presence signals received from the exciter (15) and indicative of the position of a polarity of the rotor to electrically supply the coils on the inductor with a frequency with square or sinusoidal wave in phase with the rotation of the rotor.

2. An electric motor as claimed in claim 1, wherein the exciter (15) is in the form of a magnetic, inductive, optic, electronic, mechanical element applied to a support disc (16) keyed onto the driving shaft.

3. An electric motor as claimed in claim 1, wherein the exciter (15) is in the form of a magnetic, inductive, optic, electronic, mechanical element applied directly onto the rotor.

4. An electric motor as claimed in claim 2 or 3, wherein said exciter (15) is formed by a succession of permanent magnet segments, in a number related to the polar expansions of the motor.

5. An electric motor as claimed in claims 2, 3 or 4, wherein the sensor-detector (17) of the presence or position of the exciter (15) is of the magnetic, optic, inductive, electronic, mechanical type or the like.

6. An electric motor as claimed in claim 1, in which the inversion circuit is powered with direct current, and the direct current is supplied to the coils on the inductor, inverted with a required frequency in response to the polarity signals supplied by the sensor to the inversion circuit.

7. An electric motor as claimed in claim 1, wherein the inversion circuit is powered with mains alternating current, which is rectified into direct current by a rectifier included in said inversion circuit and supplied to the inductor coils inverted with a required frequency in response to the signals of polarity sent out by the polarity sensor to the inversion circuit.

8. An electric motor as claimed in claim 1 and in any of the claims from 2 to 7, wherein the excitation coils (111', 112') of the expansions (111, 112) of the inductor are powered independently, and wherein the control circuit (118) is a suitable commutator to control alternately said coils in phase with the rotor in response to the signals coming from the sensor-detector (117) interacting with the exciter (115), each coil being supplied with pulsating current always of the same positive or negative sign in alternation with the supply of the other coil with the current coming from the commutator circuit so as to polarize the polar expansions of the inductor correspondingly to the polarity of the rotor passing in front of it.

9. An electric motor comprising an inductor with at least two polar expansions (11, 12) provided with excitation coils (11', 12') and a bi- or multi-polar rotor (13) rotating with respect to the polar expansions of the inductor and having a driving shaft (14), characterized in a commutator (216) designed to receive the supply current and distribute it selectively to the excitation coils of the inductor in phase with the rotation of the rotor and independently of the number of revolutions of the same rotor, said commutator (216) including at least one distribution support (217) having contact tracks (219, 220, 221) electrically connected to the excitation coils (11', 12') to supply them selectively, and at least one switch brush (218) with contacts (22, 223, 224) connected to an external circuit for electrical supply and sliders on the contact tracks of said support to supply the electrical current selectively to the same tracks and through these to the excitation coils.

10. An electric motor according to claim 9, in which said distribution support (217) is fixed and the switch brush (218) rotates, the support being fixed onto the stator and to another stationary part of the motor, the brush being fixed and rotating with the driving shaft (14).

11. An electric motor as claimed in claim 9, wherein the distribution support (217) is keyed onto and turns with the driving shaft and the brush is fixed.

12. An electric motor as claimed in claims 9 and 10 or 11, wherein said distribution support (217) is in a flat shape, is placed concentrically to the driving shaft (14) and carries, on one of its front surfaces, at least one first continuous annular contact track (219) concentric with the driving shaft, a second arc contact track (220) on a circumference concentric with the first annular track (219) and a third arc contact track (221) on another circumference concentric with the annular track (219) and being in an opposite quadrant to the one where the second arc track (220) is located, and in which the switch brush (218) carries a first contact (222) to slide on the first annular track (219), a second contact (223) to slide on the second arc track (220) and a third contact (224) to slide on the third arc track of the distributor support (217), to the annular track (219) being connected with a common conductor for the excitation coils, to the arc tracks (220, 221) being connected with a phase conductor for each coil, the first contact (222) of the brush being connected to a common conductor of the power supply circuit and the second and third contact being connected to a phase conductor of said power supply circuit.

13. An electric motor as claimed in claim 12, wherein every arc track (220, 221) of the distribution support (217) has an initial sector (220', 221') narrower in a radial direction and at a band inside the track itself, and in which the brush, when rotating, extends by the effect of centrifugal force so that the second and third contact will meet and follow the internal band of the track with a low number of revolutions of the motor and the shorter external band of the track with a higher number of revolutions.

14. An electric motor as claimed in claim 9, wherein the commutator support is in a cylindrical form, keyed onto and rotating with the driving shaft, and in which the contact tracks are required circumferentially on the external surface of said cylindrical support, said tracks being distributed on said support axially and being able to have different angular extensions, whereas the switch brush can be positioned at every track.
